# EUROPEAN PATENT APPLICATION

(11) **EP 0 541 473 A2**
(43) Date of publication of application: **12.05.1993**
(21) Application number: 92500142.2
(22) Date of filing: 02.11.1992
(51) Int. Cl.: B29C 67/14, F02M 35/10, F01L 3/20

(54) **Method of producing intake sheets for two-stroke engines**

(30) Priority: 08.11.1991 ES 9102475
(71) Applicant: Marin Tomas, Francisco Jose, E-08903 Hospitalet de Llobregat (Barcelona) (ES)
(72) Inventor: Marin Tomas, Francisco Jose, E-08903 Hospitalet de Llobregat (Barcelona) (ES)
(74) Representative: Marques Alos, Fernando

(57) **Abstract**

**"A METHOD OF PRODUCING INTAKE SHEETS FOR TWO-STROKE ENGINES"** characterised in that a layer of catalysed epoxy is applied to the lower part of a mould and by means of which a number of sheets of carbon fibre fabric of various grammages soaked in the resin are fitted onto the assembly. The assembly is then introduced into a vacuum chamber where the air held within the resin or in the joints of the fabric is evacuated. Thereafter the mould is closed and the laminate is compressed, initialising the polymerisation of the resin for which it is subjected to heat treatment. Once said treatment is finished and the mould is at room temperature, the composite is released from the mould and cut using any abrasive means.

## Description

### DESCRIPTION OF THE INVENTION

The object of the present invention is a **METHOD OF PRODUCING INTAKE SHEETS FOR TWO-STROKE ENGINES.**

Intake sheets for two-stroke engines are designed to impede the backflow of the air/petrol mixture coming from the carburettor and heading towards the cylinder via the intake collectors. These parts are therefore subjected to constant vibration which can easily reach levels of 20,000 open/close cycles per second in high performance and competition engines, as well as working temperatures which can easily exceed 100 degrees centigrade. For this reason the current sheets made of steel or glass fibre exhibit a distinct drop in performance above 13-14,000 rpm.

It has been shown that by substituting the traditional intake sheets of a two-stroke engine for ones made of carbon fibre a notable increase in engine performance is achieved across the entire power curve thanks to the mechanical properties given to the carbon fibre as a result of the process described herein.

In effect, the process being claimed consists of a personalised treatment of carbon fibre by means of which it acquires the optimum mechanical properties for an advantageous operation of the intake sheets of two-stroke engines.

There follows a series of drawings in order to further illustrate what has thus far been disclosed.

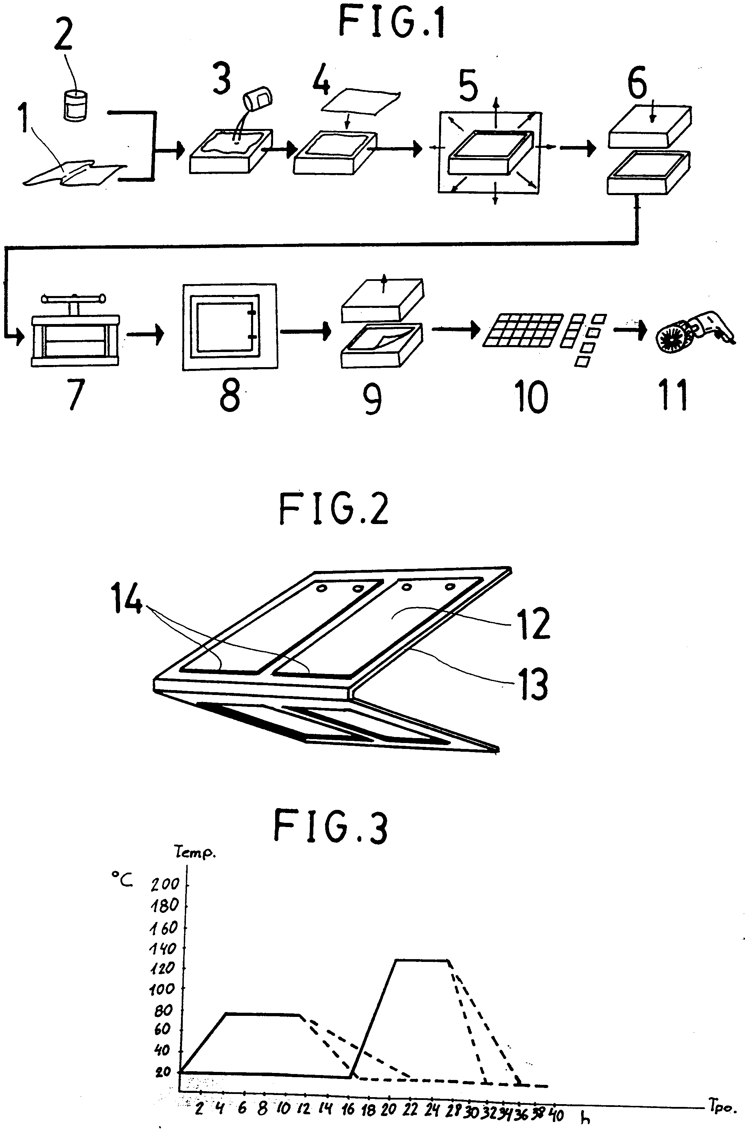

Figure 1 represents a diagram corresponding to the different steps in the process being claimed, Figure 2 shows a view of the finished product and Figure 3 shows two graphs corresponding to two optimum examples of the heat treatment process.

Two fundamental elements are involved in this novel process: carbon fibre 1 in the form of fabric of various grammages, which range from 100 g/m2 to 200 g/m2, and an epoxy resin and catalyst 2 which can withstand temperatures of 80 to 170^{º}C, has a vitreous transition of 80^{º}C to over 150^{º}C, a Tensile strength of 45 to 90 N/mm2, a breaking extension of 2 to 9 %, a Tensile strength perpendicular to the fibre of 25 to 75 N/mm2 and a Modulus of elasticity of 3000 to 5000 MPA. Using any epoxy whose properties lie within these limits will give the optimum elasticity and durability for a general improvement in the performance of the engine in which the sheets are to be fitted.

The process being claimed begins once the epoxy has been catalysed, a portion thereof being spread extended over the surface of the lower mould 3 by means of which one or more sheets of carbon fibre fabric soaked as much as possible in the resin 4 are fitted onto the assembly, the number of sheets depending on the final laminate thickness desired. The assembly is then introduced into a vacuum chamber 5 where the air held within the resin or in the joints of the fabric is evacuated. This step is carried out only if the viscosity of the epoxy and the grammage of the fabric are such that it is necessary in order to achieve a final product which is totally smooth and of uniform density over the entire surface.

In the next step the mould is closed 6 and the laminate is compressed 7. Thereafter begins the polymerisation of the resin, the mould and composite being subjected to heat treatment 8 which varies depending on the rigidity or flexibility required for each sheet model and which consists of increasing the temperature progressively from 20 or 25^{º}C up to a maximum of 170^{º}C and maintaining the temperature for 8 to 40 hours according to the results desired.

Once the heat treatment process is over and the mould is at room temperature, the composite is released from the mould 9 and cut 10 using any abrasive means such that there are no splintered edges, the most suitable being by diamond disc cutter or laser, die cutting being possible in only a few cases. Finally the surface and above all the edges of the sheets which have been cut are lightly polished 11 in order to eliminate any small imperfections in said areas.

To ensure that the entire sheet is of uniform thickness, metal moulds are used which have polished surfaces and which have been pre-treated with a suitable mould release agent and gauged to the correct thickness, which can be from 0.15 to 0.65 mm according to the characteristics of the engine.

In certain circumstances, if the sheet is excessively long, the moulds will have a certain degree of concavity such that when the resulting sheets 12 are pressed into their housing 13 the lower border thereof 14 is hermetically sealed.

Given the above description it should be emphasised that the details of realisation of the idea disclosed may be subject to small alterations providing that they are based on the fundamental principles of the idea, which is essentially that which is outlined in the description.

## Claims

1. **A METHOD OF PRODUCING INTAKE SHEETS FOR TWO-STROKE ENGINES** characterised essentially in that to the lower part of a metallic mould, whose surface is polished and which has been treated with a mould release agent and gauged to between 0.15 and 0.65 mm, is applied a layer of pre-catalysed epoxy which can withstand temperatures of 80 to 170^{º}C, has a vitreous transition of 80^{º}C to over 150^{º}C, a Tensile strength of 45 to 90 N/mm2, a breaking extension of 2 to 9 %, a Tensile strength perpendicular to the fibre of 25 to 75 N/mm2 and a Modulus of elasticity 3000 to 5000 MPA, after which one or more sheets of carbon fibre fabric of various grammages from 100 g/m2 to 200 g/m2 and soaked in the resin are fitted onto the assembly, the number of sheets depending on the final thickness of the laminate which is desired. The assembly is then introduced into a vacuum chamber where the air held within the resin or in the joints of the fabric is evacuated. The mould is then closed and the laminate is compressed after which the polymerisation of the resin begins, the mould with the composite being subjected to heat treatment which consists of increasing the temperature progressively from 20 or 25^{º}C up to a maximum of 170^{º}C and maintaining the temperature for 8 to 40 hours according to the results desired. Once the heat treatment process is over and the mould is at room temperature, the composite is released from the mould and cut using any abrasive means such that there are no splintered edges on any of the pieces, which are finally polished until all imperfections produced during the cutting process are eliminated.

2. **A METHOD OF PRODUCING INTAKE SHEETS FOR TWO-STROKE ENGINES** according to claim 1 characterised essentially in that in cases where the intake sheet to be produced is of considerable length, a mould which has a certain degree of concavity is used.
